# EUROPEAN PATENT APPLICATION

(11) **EP 4 418 428 A1**
(43) Date of publication of application: **21.08.2024**
(21) Application number: 23787550.5
(22) Date of filing: 04.04.2023
(51) Int. Cl.: H01M 50/271, H01M 50/249, H01M 50/289

(54) **END CAP ASSEMBLY, BATTERY CELL, BATTERY, AND POWER CONSUMING APPARATUS**

(30) Priority: 11.04.2022 CN 202220827050 U
(71) Applicant: Contemporary Amperex Technology Co., Limited, Ningde, Fujian 352100 (CN)
(72) Inventor: CHEN, Long, Ningde, Fujian 352100 (CN); LIN, Denghua, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Behr, Wolfgang
(86) International application number: PCT/CN2023/086091
(87) International publication number: WO 2023/197905

(57) **Abstract**

Embodiments of this application provide an end cover assembly, a battery cell, a battery, and an electric device. The end cover assembly includes: an electrode terminal; a first fastener, where the first fastener encloses an accommodating space with openings at two ends in a first direction, at least a portion of the electrode terminal is accommodated in the accommodating space, and a surface of the first fastener facing the accommodating space is provided with a first insulating layer; a second fastener, where the second fastener connects at least a portion of a surface of the electrode terminal facing the first fastener and the first fastener; and an end cover plate, where a first end of the first fastener in the first direction is fixedly connected to the end cover plate to fix the electrode terminal to the end cover plate. The provision of the first insulating layer can avoid a short circuit problem caused by overlapping of the electrode terminal and the first fastener, guaranteeing the safety performance of the battery cell.

## Description

This application claims priority to Chinese Patent Application No. 202220827050.7, filed with the China National Intellectual Property Administration on April 11, 2022 and entitled "END COVER ASSEMBLY, BATTERY CELL, BATTERY, AND ELECTRIC DEVICE", which is incorporated herein by reference in its entirety.

### TECHNICAL FIELD

This application relates to the field of battery technologies, and more specifically, to an end cover assembly, a battery cell, a battery, and an electric device.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technologies are an important factor in connection with their development.

With the development of battery technologies, various performances of batteries are constantly improving, among which the safety performance of batteries is particularly important. If the safety performance of a battery cannot be guaranteed, the battery cannot be used. Therefore, how safety performance of batteries is guaranteed is an urgent technical problem that needs to be solved in battery technologies.

### SUMMARY

Embodiments of this application provide an end cover assembly, a battery cell, a battery, and an electric device, so as to guarantee the safety performance of the battery.

According to a first aspect, this application provides an end cover assembly of a battery cell, including: an electrode terminal; a first fastener, where the first fastener encloses an accommodating space with openings at two ends in a first direction, at least a portion of the electrode terminal is accommodated in the accommodating space, and a surface of the first fastener facing the accommodating space is provided with a first insulating layer; a second fastener, where the second fastener connects at least a portion of a surface of the electrode terminal facing the first fastener and the first fastener; and an end cover plate, where a first end of the first fastener in the first direction is fixedly connected to the end cover plate to fix the electrode terminal to the end cover plate.

With the provision of the first insulating layer on the surface of the first fastener facing the accommodating space, even if the electrode terminal and the first fastener overlap due to issues such as mold aging or assembly misalignment, the two will not be electrically connected since they are separated by the first insulating layer, avoiding a short circuit problem on the end cover. This guarantees the safety performance of the battery cell.

In some embodiments, a surface of the electrode terminal connected to the second fastener is provided with a second insulating layer.

On the basis that the first fastener is provided with the first insulating layer, the electrode terminal is provided with the second insulating layer. This can further improve the insulating performance between the first fastener and the electrode terminal, so that the short circuit problem on the end cover that may occur when the first fastener and the electrode terminal overlap due to issues such as mold aging or assembly misalignment can be avoided, guaranteeing the safety performance of the battery cell.

In some embodiments, the first end of the first fastener is provided with a connecting portion, where the connecting portion is perpendicular to the first direction and connected to the end cover plate.

The provision of the connecting portion can increase contact area between the first fastener and the end cover plate, stabilizing the placement of the first fastener on the end cover plate and facilitating a fixed connection between the first fastener and the end cover plate.

In some embodiments, the connecting portion is welded to the end cover plate.

In this way, the first fastener can be fixedly connected to the end cover plate, and the second fastener and the electrode terminal can be fixed to the end cover plate at the same time, so that the electrode terminal is not easy to detach from the end cover plate, and the safety performance of the battery cell is guaranteed.

In some embodiments, a second end of the first fastener in the first direction is provided with a platform portion, where the platform portion is perpendicular to the first direction.

The platform portion plays a good role in fixing the connection of the first fastener, the second fastener, and the electrode terminal, preventing the three from easily separating, and guaranteeing the safety performance of the battery cell.

In some embodiments, the surface of the electrode terminal connected to the second fastener is provided with a step structure, where at least a portion of the platform portion is arranged in a space formed by the step structure.

The step structure can cooperate with the platform portion and the two are connected through the second fastener. When subjected to external forces, the three mutually provide a structure for fixing the connection with each other, making them not easily separated, guaranteeing the safety performance of the battery cell.

In some embodiments, the first fastener includes a body portion, where the body portion is provided between the connecting portion and the platform portion, and the body portion is configured to connect the connecting portion and the platform portion, the body portion, the connecting portion, and the platform portion together enclosing the accommodating space.

The body portion can be combined with the connecting portion and the platform portion to j ointly form an annual structure, providing an accommodating space for the electrode terminal, and fixes the electrode terminal to the end cover plate through the second fastener. This prevents the electrode terminal from easily detaching from the end cover plate and guarantees the safety performance of the battery cell.

In some embodiments, in the first direction, a diameter of the body portion gradually decreases along a direction leaving inside of the battery cell.

Such design allows for smoother transition between the part of the body portion connected to the connecting portion and the part of the body portion connected to the platform portion, and also facilitates the preparation of the first fastener in the manufacturing process.

In some embodiments, an entire surface of the first fastener is provided with the first insulating layer.

This facilitates the processing of the first insulating layer on the first fastener, minimizing the risk of a short circuit between the first fastener and the electrode terminal, thereby guaranteeing the safety performance of the battery cell.

In some embodiments, the first fastener is provided with at least one first through hole, where the first through hole runs through a wall of the first fastener, and the second fastener fills the first through hole.

The first through hole can not only limit the position of the first fastener during the use of molds but also allow for a fixed connection structure between the first fastener and the second fastener, guaranteeing the stability of the connection between the first fastener and the second fastener. This prevents separation of the first fastener and the second fastener under external forces, guaranteeing the safety performance of the battery cell.

In some embodiments, at least one recess is provided on a surface of the electrode terminal connected to the second fastener, and the second fastener fills the recess.

The provision of the recess can not only limit the position of the electrode terminal but also allow for a fixed connection structure between the electrode terminal and the second fastener, enhancing the stability of the connection between the electrode terminal and the second fastener. This prevents separation of the electrode terminal and the second fastener under external forces and guarantees the safety performance of the battery cell.

According to a second aspect, this application provides a battery cell, including: a housing having a first opening, configured to accommodate an electrode assembly; and the end cover assembly in the foregoing embodiments, configured to cover the first opening.

According to a third aspect, this application provides a battery, including the battery cell in the foregoing embodiments and a box, where the box is configured to accommodate the battery cell.

According to a fourth aspect, this application provides an electric device, including the battery in the foregoing embodiments, where the battery is configured to supply electrical energy to the electric device.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a battery cell according to some embodiments of this application;
FIG. 4 is a schematic structural diagram of an end cover assembly of a battery cell according to some embodiments of this application;
FIG. 5 is a schematic structural diagram of a first fastener according to some embodiments of this application;
FIG. 6 is a schematic structural bottom view of a first fastener according to some embodiments of this application;
FIG. 7 is a schematic cross-sectional view of section A-A in FIG. 6;
FIG. 8 is a schematic structural diagram of an electrode terminal according to some embodiments of this application;
FIG. 9 is a schematic structural diagram of an end cover assembly according to some embodiments of this application;
FIG. 10 is a schematic structural top view of the end cover assembly in FIG. 9;
FIG. 11 is a schematic cross-sectional view of section B-B in FIG. 10; and
FIG. 12 is a schematic diagram of an enlarged structure of portion M in FIG. 11.

Reference signs in specific embodiments are as follows:
1. vehicle; 10. battery; 20. battery cell; 30. controller; 40. motor;
11. box; 111. first portion; 112. second portion; 200. battery module;
21. electrode terminal; 211. second insulating layer; 212. recess; 22. first fastener; 221. accommodating space; 222. first insulating layer; 223. first through hole; 224. connecting portion; 225. body portion; 226. platform portion; 23. second fastener; 24. end cover plate;
31. electrode assembly; 32. housing; 33. end cover; 34. battery box; 35. connecting member; 311a. first tab; 312a. second tab; 332. pressure relief mechanism; and
Y first direction.

The accompanying drawings are not drawn to scale.

### DESCRIPTION OF EMBODIMENTS

The following describes the technical solutions in the embodiments of this application with reference to the accompanying drawings.

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to package one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be a wound structure or a stacked structure. However, the embodiments of this application are not limited thereto.

To meet different power requirements, the battery may include a plurality of battery cells, and the plurality of battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery. The battery is then disposed in an electric device to provide electrical energy for the electric device.

For the development of battery technologies, many design factors need to be considered, for example, performance parameters such as energy density, cycle life, discharge capacity, and charge and discharge rate, as well as safety performance of the battery.

A battery usually includes a plurality of battery cells, and inside the battery, typically a busbar is used to implement electrical connection between the plurality of battery cells, for example, in parallel, in series, or in series-parallel. Specifically, the busbar may implement the electrical connection between the battery cells by connecting electrode terminals of the battery cells. In a battery cell, the electrode terminal is also electrically connected to the electrode assembly of the battery cell to output the electrical energy of the battery cell. However, during the process that the electrode terminal is connected to a fastener and then fixed to an end cover of the battery cell through the fastener, issues such as mold aging or assembly misalignment may cause the electrode terminal to overlap with the metallic fastener. Since the fastener is connected to the end cover, this may result in a short circuit between the positive and negative electrodes of the battery cell, posing a significant safety hazard to the battery usage.

In view of this, this application provides an end cover assembly. An electrode terminal on the end cover assembly is accommodated in an accommodating space enclosed by a first fastener and connected to the first fastener through a second fastener. The first fastener is configured to be connected to an end cover plate, and a surface of the first fastener facing the accommodating space is provided with an insulating layer. With the provision of the insulating layer on the surface of the first fastener that may come into contact with the electrode terminal, even if the first fastener and the electrode terminal overlap due to issues such as mold aging or assembly misalignment, the electrical connection between the first fastener and the electrode terminal can be avoided. This, in turn, avoids a short circuit between positive and negative electrode terminals on the end cover, guaranteeing the safety performance of a battery.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

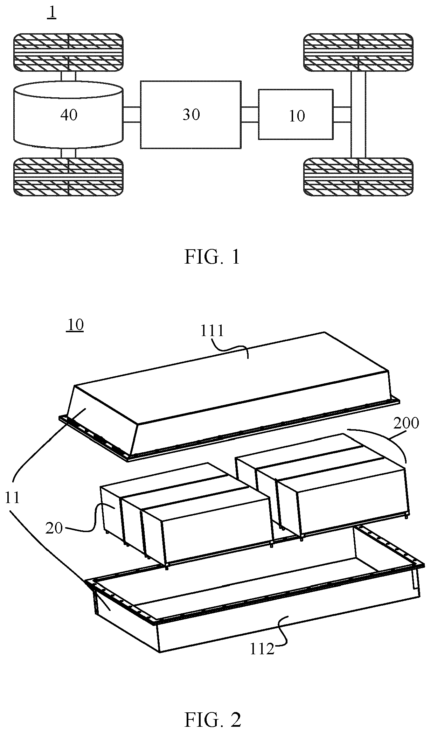

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery.

For example, FIG. 2 is a schematic structural diagram of a battery 10 according to an embodiment of this application. The battery 10 may include at least one battery module 200. The battery module 200 includes a plurality of battery cells 20. The battery 10 may further include a box 11. Inside of the box 11 is a hollow structure. The plurality of battery cells 20 are accommodated in the box 11. FIG. 2 shows a possible implementation of the box 11 in the embodiments of this application. As shown in FIG. 2, the box 11 may include two portions that are referred as a first portion 111 and a second portion 112 respectively, and the first portion 111 and the second portion 112 are snap-fitted. Shapes of the first portion 111 and the second portion 112 may be determined according to a shape of the combination of the battery module 200. At least one of the first portion 111 and the second portion 112 is provided with an opening. For example, as shown in FIG. 2, the first portion 111 and the second portion 112 each may be a hollow cuboid and have only one face with an opening, where an opening of the first portion 111 and an opening of the second portion 112 are opposite each other, and the first portion 111 and the second portion 112 are snap-fitted to form a box 11 having an enclosed chamber.

For another example, unlike FIG. 2, it is possible that only one of the first portion 111 and the second portion 112 is a hollow cuboid with an opening, and the other may be a plate for covering the opening. For example, an example is used where the second portion 112 is a hollow cuboid and has only one face with an opening and the first portion 111 is a plate. Therefore, the first portion 111 covers the opening of the second portion 112 to form a box 11 with an enclosed chamber. The chamber may be used for accommodating the multiple battery cells 20. The multiple battery cells 20 are connected in parallel, series, or series-parallel, and then put into the box 11 formed after the first portion 111 and the second portion 112 are snap-fitted.

Optionally, the battery 10 may further include other structures. Details are not described herein. For example, the battery 10 may further include a busbar, where the busbar is configured to implement an electrical connection among multiple battery cells 20, for example, a parallel connection, a series connection, or a series-parallel connection. Specifically, the busbar may implement the electrical connection between the battery cells 20 by connecting electrode terminals of the battery cells 20. Further, the busbar may be fixed to the electrode terminal of the battery cell 20 by welding. Electrical energy of the multiple battery cells 20 may be further led out through a conductive mechanism that passes through the box 11.

Depending on different power needs, battery cells 20 in the battery module 200 may be provided in any quantity. The multiple battery cells 20 may be connected in series, parallel, or series-parallel to achieve greater capacity or power. Because each battery 10 may include a large quantity of battery cells 20, for ease of installation, the battery cells 20 may be disposed by group, and each group of battery cells 20 form a battery module 200. The quantity of battery cells 20 included in the battery module 200 is not limited, and may be set as required.

The battery 10 may include a plurality of battery modules 200. These battery modules 200 may be connected in series, parallel, or series-parallel.

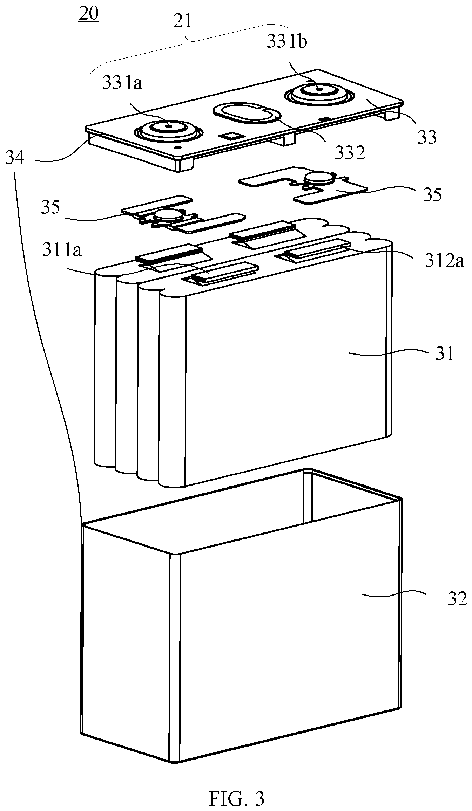

FIG. 3 is a schematic structural diagram of a battery cell 20 according to an embodiment of this application. The battery cell 20 includes one or more electrode assemblies 31, a housing 32, and an end cover 33. The housing 32 and the end cover 33 form an enclosure or battery box 34.

The housing 32 is a component configured to accommodate the electrode assembly 31. The housing 32 may be a hollow structure with an opening formed at one end; or the housing 32 may be a hollow structure with openings formed at two opposite ends. If the housing 32 is a hollow structure with an opening formed at one end, one end cover 33 may be provided. If the housing 32 is a hollow structure with openings formed at two opposite ends, two end covers 33 may be provided, where the two end covers 33 cover the openings at two ends of the housing 32 respectively. The housing 32 may be made of various materials, such as copper, iron, aluminum, steel, and aluminum alloy. The housing 32 may have a variety of shapes, for example, cylinder, cuboid, or the like. The housing 32 depends on a combined shape of the one or more electrode assemblies 31. For example, the housing 32 may be a hollow cuboid, a cube, or a cylinder, and one surface of the housing 32 has an opening for placing the one or more electrode assemblies 31 into the housing 32. For example, when the housing 32 is a hollow cuboid or cube, one face of the housing 32 is an opening face, which means that the face has no wall so that the inside and the outside of the housing 32 are communicated. When the housing 32 is a hollow cylinder, the end face of the housing 32 is an opening face, which means that the end face has no wall so that the inside and the outside of the housing 32 are communicated. The end cover 33 covers the opening and joins the housing 32 to form an enclosed cavity for accommodating the electrode assembly 31. For example, in FIG. 3, the housing 32 is a cuboid structure. The housing 32 is a hollow structure with an opening formed at one end. The wall of the housing 32 as well as the end cover 33 are referred to as the walls of the battery cell 20. For a rectangular-type battery cell 20, the walls of the housing 32 include a bottom wall and four side walls. The housing 32 is filled with an electrolyte such as a liquid electrolyte.

The end cover 33 is a component that covers the opening of the housing 32 to isolate an internal environment of the battery cell 20 from an external environment. The end cover 33 may match the housing 32 in shape. As shown in FIG. 3, the housing 32 is a cuboid structure. The end cover 33 is a rectangular plate structure that matches the housing 32. The end cover 33 may also be made of various materials, such as copper, iron, aluminum, steel, and aluminum alloy. The end cover 33 and the housing 32 may be made of same or different materials.

The battery cell 20 may also include two electrode terminals 331 and the two electrode terminals 331 may be disposed on the end cover 33. Two electrode terminals 331 are fixed on a flat surface where the end cover 33 resides. The two electrode terminals 331 are a positive electrode terminal 331a and a negative electrode terminal 331b respectively. Each electrode terminal 331 is provided with a corresponding connecting member 35, or a current collection member. The connecting member 35 is located between the end cover 33 and the electrode assembly 31 and is configured to electrically connect the electrode assembly 31 to the electrode terminal 331.

The electrode assembly 31 is a component in which electrochemical reactions take place in the battery cell 20. The electrode assembly 31 may be cylindrical, cuboid, or the like. If the electrode assembly 31 is a cylindrical structure, the housing 32 may also be a cylindrical structure. If the electrode assembly 31 is a cuboid structure, the housing 32 may also be a cuboid structure. As shown in FIG. 3, each electrode assembly 31 has a first tab 311a and a second tab 312a. The first tab 311a and the second tab 312a have opposite polarities. For example, when the first tab 311a is a positive tab, the second tab 312a is a negative tab. The positive tab may be formed by stacking a part of the positive electrode plate that is uncoated with the positive electrode active substance layer, and the negative tab may be formed by stacking a part of the negative electrode plate that is uncoated with the negative electrode active substance layer. The first tabs 311a of the one or more electrode assemblies 31 are connected to one electrode terminal through one connecting member 35, and the second tabs 312a of the one or more electrode assemblies 31 are connected to the other electrode terminal through the other connecting member 35. For example, the positive electrode terminal 331a is connected to the positive tab through one connecting member 35, and the negative electrode terminal 331b is connected to the negative tab through the other connecting member 35.

In the battery cell 20, one or more electrode assemblies 31 may be provided in the housing 32 based on actual use demands. For example, as shown in FIG. 3, four separate electrode assemblies 31 are provided in the battery cell 20.

The battery cell 20 may be further provided with a pressure relief mechanism 332. The pressure relief mechanism 332 is configured to be actuated to relieve the internal pressure or temperature of the battery cell 20 when the internal pressure or temperature reaches a threshold.

The pressure relief mechanism 332 may be various possible pressure relief structures, which is not limited in the embodiments of this application. For example, the pressure relief mechanism 332 may be a temperature-sensitive pressure relief mechanism, where the temperature-sensitive pressure relief mechanism is configured to be melted when the internal temperature of the battery cell 20 provided with the pressure relief mechanism 332 reaches a threshold; and/or the pressure relief mechanism 332 may be a pressure-sensitive pressure relief mechanism, where the pressure-sensitive pressure relief mechanism is configured to be split when the internal pressure of the battery cell 20 provided with the pressure relief mechanism 332 reaches a threshold.

The battery cell 20 shown in FIG. 3 is just an example. In actual production, the shape of the battery cell 20 can be changed according to different requirements.

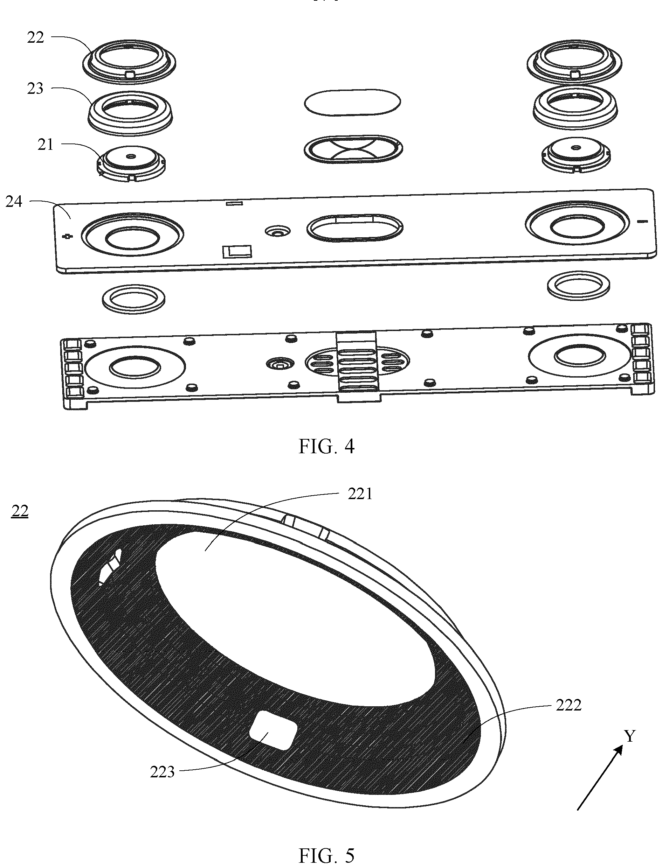

An embodiment of this application provides an end cover assembly that can be applied to the end cover 33 in FIG. 3. Referring to FIG. 4, FIG. 4 is a schematic structural diagram of the end cover assembly. The end cover assembly may include an electrode terminal 21, a first fastener 22, a second fastener 23, and an end cover plate 24. The first fastener 22 encloses an accommodating space 221 with openings at two ends in a first direction Y, at least a portion of the electrode terminal 21 is accommodated in the accommodating space 221, and a surface of the first fastener 22 facing the accommodating space 221 is provided with a first insulating layer 222. The second fastener 23 connects at least a portion of a surface of the electrode terminal 21 facing the first fastener 22 and the first fastener 22. A first end of the first fastener 22 in the first direction Y is fixedly connected to the end cover plate 24 to fix the electrode terminal 21 to the end cover plate 24.

The first fastener 22 has an annular structure as a whole, and this circular structure can enclose a certain accommodating space 221. Referring to FIG. 5, FIG. 5 is a schematic structural diagram of the first fastener 22. The accommodating space 221 has two openings at two ends in the first direction Y, and the electrode terminal 21 can be placed in the accommodating space 221 through the two openings. The first direction Y may be perpendicular to the end cover plate 24. The electrode terminal 21 may have only a portion accommodated in the accommodating space 221, while having other portions accommodated through the two openings at the two ends in a space beyond the range of the accommodating space 221.

The second fastener 23 is a member for fixedly connecting the electrode terminal 21 and the first fastener 22. In a possible embodiment, the second fastener 23 may be made of plastic, connecting the electrode terminal 21 and the first fastener 22 by injection molding. Specifically, during the assembly of the end cover assembly using a mold, the electrode terminal 21 and the first fastener 22 may be placed at preset positions on the mold, and then a gap between the electrode terminal 21 and the first fastener 22 is injection-molded. The second fastener 23 is formed after the molded portion is solidified. The second fastener 23 fixedly connects the electrode terminal 21 and the first fastener 22.

The first fastener 22 is fixedly connected to the end cover plate 24. After the first fastener 22, the second fastener 23, and the electrode terminal 21 are fixedly connected into a whole through molding, the electrode terminal 21 and the second fastener 23 can also be fixedly connected to the end cover plate 24 through the fixed connection between the first fastener 22 and the end cover plate 24. Considering that the first fastener 22 needs to enclose an accommodating space 221 to accommodate at least a portion of the electrode terminal 21, the part of the first fastener 22 fixedly connected to the end cover plate 24 may be the first end of the first fastener 22 in the first direction Y In a possible embodiment, for example, the first fastener 22 may be made of metal and provided at a reserved location on the end cover plate 24. The first end is in contact with the end cover plate 24, and the first fastener 22 is fixedly connected to the end cover plate 24 through welding at an edge of the first end.

When accommodated in the accommodating space 221, an electrode terminal 21 usually does not come into contact with the first fastener 22 to avoid a connection between the electrode terminal 21 and the end cover plate 24. This prevents a short circuit problem that occurs when electrical energy generated by the electrode assembly inside the battery cell 20 is output through the electrode terminal 21 which is connected to an electrode terminal 21 of the opposite polarity through the end cover plate 24. However, due to issues such as mold aging or assembly misalignment, there is still a risk of the electrode terminal 21 coming into contact with the first fastener 22. Therefore, the first fastener 22 in this embodiment of this application is provided with a first insulating layer 222.

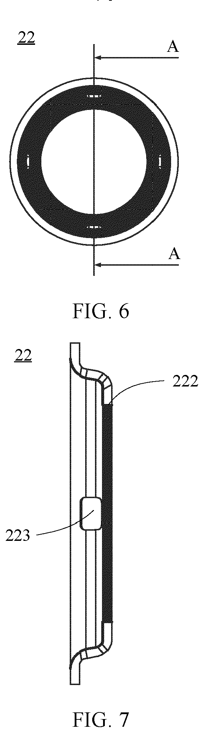

The first insulating layer 222 is provided on the surface of the first fastener 22 facing the accommodating space 221. Since the accommodating space 221 is accommodated with the electrode terminal 21, the surface of the first fastener 22 facing the accommodating space 221 is also the surface that most likely comes into contact with the electrode terminal 21. With the first insulating layer 222 provided on the surface, the conduction between the electrode terminal 21 and the first fastener 22 can be avoided. Referring to FIGs. 5 to 7, it can be seen that the first insulating layer 222 is provided on the first fastener 22. FIG. 6 is a bottom view of the first fastener 22 shown in FIG. 5, and FIG. 7 is a sectional view of section A-A in FIG. 6. In FIGs. 5 and 6, a shaded portion is provided with the first insulating layer 222, and in FIG. 7, a shaded portion and bold portion are provided with the first insulating layer 222.

The first insulating layer 222 may be an insulating material sprayed on the surface of the first fastener 22, such as polytetrafluoroethylene or insulating paint; may be an insulating material adhered to the surface of the first fastener 22, such as blue tape; or may be an insulating layer formed through oxidation treatment, such as conventional oxidation treatment or anodic oxidation treatment.

With the provision of the first insulating layer 222 on the surface of the first fastener 22 facing the accommodating space 221, even if the electrode terminal 21 and the first fastener 22 overlap due to issues such as mold aging or assembly misalignment, the two will not be electrically connected since they are separated by the first insulating layer 222, avoiding a short circuit problem on the end cover. This guarantees the safety performance of the battery cell 20.

According to some embodiments of this application, optionally, a surface of the electrode terminal 21 connected to the second fastener 23 is provided with a second insulating layer 211.

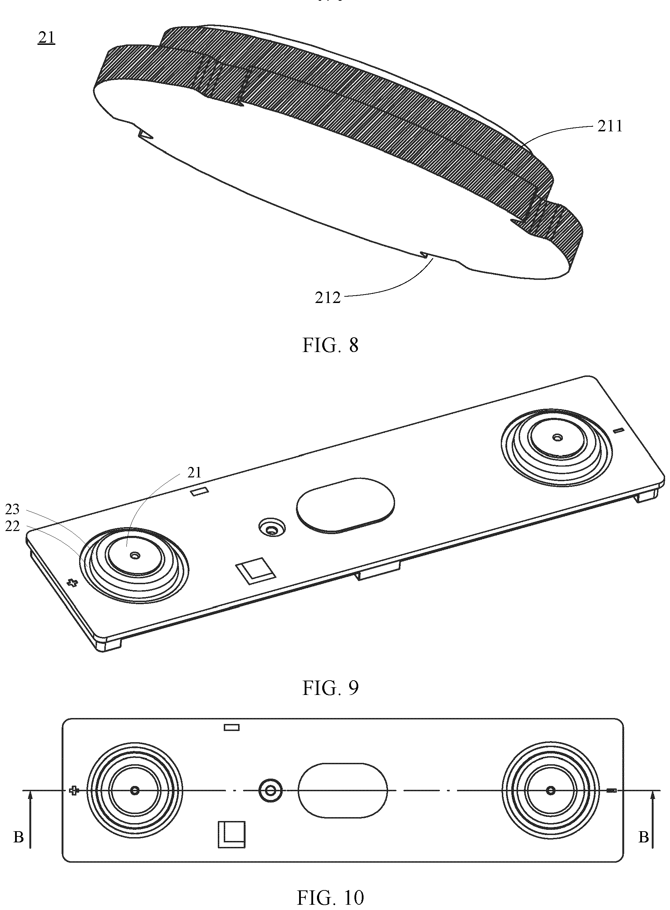

Referring to FIG. 8, FIG. 8 is a schematic structural diagram of the electrode terminal 21, where a shaded portion represents a portion of the electrode terminal 21 provided with the second insulating layer 211. During the assembly of the end cover assembly, ideally, the electrode terminal 21 is not directly connected to the first fastener 22 but indirectly connected to the first fastener 22 through the second fastener 23. The second fastener 23 can also provide a certain insulating function between the first fastener 22 and the electrode terminal 21. Therefore, to ensure insulation between the electrode terminal 21 and the first fastener 22 even when they overlap, the second insulating layer 211 is provided on the surface of the electrode terminal 21 connected to the second fastener 23. This allows the second insulating layer 211 to provide the same role of insulation as the second fastener 23.

On the basis that the first fastener 22 is provided with the first insulating layer 222, the electrode terminal 21 is provided with the second insulating layer 211. This can further improve the insulating performance between the first fastener 22 and the electrode terminal 21, so that the short circuit problem on the end cover that may occur when the first fastener 22 and the electrode terminal 21 overlap due to issues such as mold aging or assembly misalignment can be avoided, guaranteeing the safety performance of the battery cell 20.

According to some embodiments of this application, optionally, the first end of the first fastener 22 is provided with a connecting portion 224, where the connecting portion 224 is perpendicular to the first direction Y and connected to the end cover plate 24.

The following provides a description with reference to FIGs. 9 to 12. The first end is a portion of the first fastener 22 connected to the end cover plate 24. To facilitate a better connection between the first fastener 22 and the end cover plate 24, a connecting portion 224 is provided at the first end. The connecting portion 224 is perpendicular to the first direction Y; in other words, the connecting portion 224 is parallel to the end cover plate 24, allowing the first fastener 22 to be stably placed on the end cover plate 24 to facilitate subsequent fixed connection processing of the two.

The provision of the connecting portion 224 can increase contact area between the first fastener 22 and the end cover plate 24, stabilizing the placement of the first fastener 22 on the end cover plate 24 and facilitating a fixed connection between the first fastener 22 and the end cover plate 24.

According to some embodiments of this application, optionally, the connecting portion 224 is welded to the end cover plate 24.

On the basis that the first fastener 22 is provided with the connecting portion 224, the connecting portion 224 can be welded to the end cover plate 24, so that the first fastener 22 can be fixedly connected to the end cover plate 24. Specifically, the connecting portion 224 provides a welding space for welding between the connecting portion 224 and the end cover plate 24, and an end of the connecting portion 224 perpendicular to the first direction Y and away from the accommodating space 221 can be welded to the end cover plate 24.

In this way, the first fastener 22 can be fixedly connected to the end cover plate 24, and the second fastener 23 and the electrode terminal 21 can be fixed to the end cover plate 24 at the same time, so that the electrode terminal 21 is not easy to detach from the end cover plate 24, and the safety performance of the battery cell 20 is guaranteed.

In some embodiments of this application, optionally, a second end of the first fastener 22 in the first direction Y is provided with a platform portion 226, where the platform portion 226 is perpendicular to the first direction Y

The second end is the end of the first fastener 22 away from the inside of the battery cell 20 in the first direction Y The platform portion 226 is perpendicular to the first direction Y In a possible embodiment, the platform portion 226 may be parallel to the connecting portion 224. The platform portion 226 can provide a fixing function in the first direction Y for the second fastener 23 and the electrode terminal 21. When the electrode terminal 21 or the second fastener 23 is subjected to a force in the first direction Y, the platform portion 226 blocks the force, preventing the electrode terminal 21 or the second fastener 23 from easily separating under the force.

The platform portion 226 plays a good role in fixing the connection of the first fastener 22, the second fastener 23, and the electrode terminal 21, preventing the three from easily separating, and guaranteeing the safety performance of the battery cell 20.

According to some embodiments of this application, optionally, the surface of the electrode terminal 21 connected to the second fastener 23 is provided with a step structure, where at least a portion of the platform portion 226 is arranged in a space formed by the step structure.

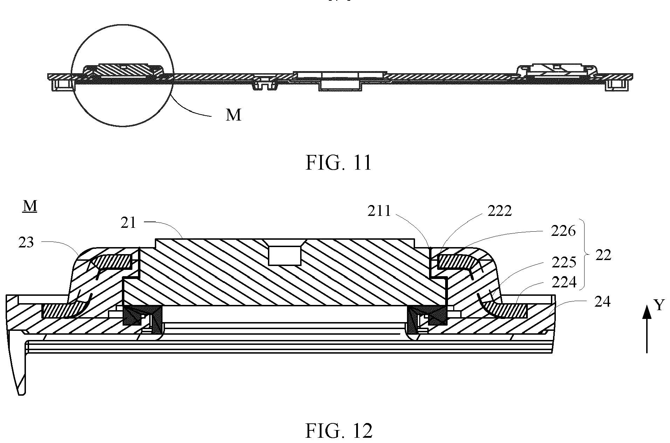

The step structure is provided on the surface of the electrode terminal 21 connected to the second fastener 23, and the surface can be regarded as a portion of a side surface of the electrode terminal 21. The step structure can form a certain space, and in an embodiment of this application, this space can accommodate at least a portion of the platform portion 226 of the first fastener 22. When at least a portion of the platform portion 226 is provided within the space formed by the step structure, the platform portion 226 still maintains a certain gap with the electrode terminal 21, that is, the platform portion 226 may not come into contact with the surface parallel to the first direction Y and the surface perpendicular to the first direction Y in the step structure. In this embodiment of this application, the surface of the first fastener 22 facing the electrode terminal 21 is provided with the first insulating layer 222. In this way, even if the platform portion 226 overlaps with the electrode terminal 21, the first insulating layer 222 prevents an electrical connection between the platform portion 226 and the electrode terminal 21, preventing a short circuit in the battery cell 20. Optionally, the surface of the electrode terminal 21 connected to the second fastener 23 may be provided with the second insulating layer 211, further preventing a short circuit in the battery cell 20. As shown in FIG. 12, bold portions of the first fastener 22 and the second fastener 23 in FIG. 12 represent the portions provided with an insulating layer.

The step structure can cooperate with the platform portion 226 and the two are connected through the second fastener 23. When subjected to external forces, the three mutually provide a structure for fixing the connection with each other, making them not easily separated, guaranteeing the safety performance of the battery cell 20.

According to some embodiments of this application, optionally, the first fastener 22 includes a body portion 225, where the body portion 225 is provided between the connecting portion 224 and the platform portion 226, and the body portion 225 is configured to connect the connecting portion 224 and the platform portion 226, the body portion 225, the connecting portion 224, and the platform portion 226 together enclosing the accommodating space 221.

Both the connecting portion 224 and the platform portion 226 are perpendicular to the first direction Y and can be regarded as two roughly parallel portions. The body portion 225 is the portion of the first fastener 22 that connects the connecting portion 224 and the platform portion 226. The body portion 225, the connecting portion 224, and the platform portion 226 together form an annular first fastener 22, and the enclosed portion is the accommodating space 221. The body portion 225 may be parallel to the first direction Y or at a certain angle with the first direction Y

The body portion 225 can be combined with the connecting portion 224 and the platform portion 226 to jointly form an annual structure, providing an accommodating space 221 for the electrode terminal 21, and fix the electrode terminal 21 to the end cover plate 24 through the second fastener 23. This prevents the electrode terminal 21 from easily detaching from the end cover plate 24 and guarantees the safety performance of the battery cell 20.

According to some embodiments of this application, optionally, in the first direction Y, a diameter of the body portion 225 gradually decreases along a direction leaving inside of the battery cell 20.

The body portion 225 of the first fastener 22 has an annual structure with a uniform thickness. The diameter of the annual structure gradually decreases along the direction leaving the inside of the battery cell 20 in the first direction Y The enclosed portion may have a frustum shape, and the cross-section of the body portion 225 may form a certain angle with the first direction Y

Such design allows for smoother transition between the part of the body portion 225 connected to the connecting portion 224 and the part of the body portion 225 connected to the platform portion 226, and also facilitates the preparation of the first fastener 22 in the manufacturing process.

According to some embodiments of this application, optionally, an entire surface of the first fastener 22 is provided with the first insulating layer 222.

To further reduce the possibility of a short circuit in the electrode terminal 21, the entire surface of the first fastener 22 is provided with the first insulating layer 222, so as to avoid the short circuit problem caused by the transfer of charge to the electrode terminal 21 through the first fastener 22 as much as possible. Provision of the first insulating layer 222 on the surface of the first fastener 22 may be implemented during the production of the first fastener 22 through uniform insulation processing of the external surface of the first fastener 22. Then the first fastener 22 is assembled onto the end cover according to the assembly steps. It should be understood that the first insulating layer 222 may be a portion corresponding to the insulating layer that can be retained after the first fastener 22 is assembled onto the end cover.

This can facilitate the processing of the first insulating layer 222 on the first fastener 22, minimizing the risk of a short circuit between the first fastener 22 and the electrode terminal 21, thereby guaranteeing the safety performance of the battery cell 20.

According to some embodiments of this application, optionally, the first fastener 22 is provided with at least one first through hole 223, where the first through hole 223 runs through a wall of the first fastener 22, and the second fastener 23 fills the first through hole 223.

In FIG. 12, a dashed line is used to indicate a portion corresponding to the first through hole 223, and actually, this portion has been filled with the second fastener 23. At least one first through hole 223 may be located in the body portion 225 of the first fastener 22, and a plurality of first through holes 223 may be arranged at equal intervals on a plane perpendicular to the first direction Y

The first through hole 223 may be used for the positioning of the first fastener 22 on the mold, that is, the first fastener 22 is placed at a preset position on the mold and is fixed through the first through hole 223 to prevent the first fastener 22 from moving in the mold and overlapping with the electrode terminal 21. The first through hole 223 may further be used to reinforce the connection between the first fastener 22 and the second fastener 23. In a possible embodiment, when filling the gap between the first fastener 22 and the electrode terminal 21 through injection molding, the second fastener 23 simultaneously fills the gap at the first through hole 223. After the second fastener 23 is solidified, the first fastener 22 will be engaged with the second fastener 23 at the first through hole 223, preventing the first fastener 22 from detaching from the second fastener 23 due to external forces and strengthening the fixed connection between them.

The first through hole 223 can not only limit the position of the first fastener 22 during the use of molds but also allow for a fixed connection structure between the first fastener 22 and the second fastener 23, guaranteeing the stability of the connection between the first fastener 22 and the second fastener 23. This prevents separation of the first fastener 22 and the second fastener 23 under external forces, guaranteeing the safety performance of the battery cell 20.

According to some embodiments of this application, optionally, the second fastener 23 fills the recess 212.

The function of the recess 212 on the electrode terminal 21 is similar to the function of the first through hole 223 on the first fastener 22. The recess 212 can serve to position the electrode terminal 21 during use of a mold and can also create a structure engaging with the second fastener 23 after the second fastener 23 is solidified, enhancing the fixed connection between the electrode terminal 21 and the second fastener 23 and preventing separation of the two due to external forces.

The recess 212 may be provided on a surface of the electrode terminal 21 connected to the second fastener 23, where the surface may also be a side surface of the electrode terminal 21. In a possible embodiment, more specifically, at least one recess 212 may be provided on a portion of the side surface of the electrode terminal 21 closer to the end cover, and a plurality of recesses 212 may be arranged at equal intervals on a plane perpendicular to the first direction Y Since the surface where the electrode terminal 21 is connected to the second fastener 23 is also a portion facing the first fastener 22, the surface formed by the recess 212 also needs to be provided with the second insulating layer 211 to avoid the problem of a short circuit caused by the surface of the recess 212 overlapping with other metal.

The provision of the recess 212 can not only limit the position of the electrode terminal 21 but also allow for a fixed connection structure between the electrode terminal 21 and the second fastener 23, enhancing the stability of the connection between the electrode terminal 21 and the second fastener 23. This prevents separation of the electrode terminal 21 and the second fastener 23 under external forces and guarantees the safety performance of the battery cell 20.

According to some embodiments of this application, this application further provides a battery cell 20 including a housing 32 and the end cover assembly according to the foregoing embodiments. The housing 32 has a first opening, configured to accommodate an electrode assembly, and the end cover assembly is configured to cover the first opening.

The housing 32 may have one first opening or two first openings. When the housing 32 has two first openings, the battery cell 20 correspondingly has two end cover assemblies according to the foregoing embodiments, and each end cover assembly has at least one electrode terminal 21.

According to some embodiments of the application, this application further provides a battery including the battery cell 20 according to the foregoing embodiments and a box 11, where the box 11 is configured to accommodate the battery cell 20.

According to some embodiments of this application, this application further provides an electric device including the battery 10 according to the foregoing embodiments, where the battery 10 is configured to supply electrical energy to the electric device.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An end cover assembly of a battery cell, **characterized by** comprising:
an electrode terminal (21);
a first fastener (22), wherein the first fastener (22) encloses an accommodating space (221) with openings at two ends in a first direction (Y), at least a portion of the electrode terminal (21) is accommodated in the accommodating space (221), and a surface of the first fastener (22) facing the accommodating space (221) is provided with a first insulating layer (222);
a second fastener (23), wherein the second fastener (23) connects at least a portion of a surface of the electrode terminal (21) facing the first fastener (22) and the first fastener (22); and
an end cover plate (24), wherein a first end of the first fastener (22) in the first direction (Y) is fixedly connected to the end cover plate (24) to fix the electrode terminal (21) to the end cover plate (24).

2. The end cover assembly according to claim 1, **characterized in that** a surface of the electrode terminal (21) connected to the second fastener (23) is provided with a second insulating layer (211).

3. The end cover assembly according to claim 2, **characterized in that** the first end of the first fastener (22) is provided with a connecting portion (224), wherein the connecting portion (224) is perpendicular to the first direction (Y) and connected to the end cover plate (24).

4. The end cover assembly according to claim 3, **characterized in that** the connecting portion (224) is welded to the end cover plate (24).

5. The end cover assembly according to claim 3 or 4, **characterized in that** a second end of the first fastener (22) in the first direction (Y) is provided with a platform portion (226), wherein the platform portion (226) is perpendicular to the first direction (Y).

6. The end cover assembly according to claim 5, **characterized in that** the surface of the electrode terminal (21) connected to the second fastener (23) is provided with a step structure, wherein at least a portion of the platform portion (226) is arranged in a space formed by the step structure.

7. The end cover assembly according to claim 5 or 6, **characterized in that** the first fastener (22) comprises a body portion (225), wherein the body portion (225) is provided between the connecting portion (224) and the platform portion (226), and the body portion (225) is configured to connect the connecting portion (224) and the platform portion (226), the body portion (225), the connecting portion (224), and the platform portion (226) together enclosing the accommodating space (221).

8. The end cover assembly according to claim 7, **characterized in that** in the first direction (Y), a diameter of the body portion (225) gradually decreases along a direction leaving inside of the battery cell.

9. The end cover assembly according to any one of claims 1 to 8, **characterized in that** an entire surface of the first fastener (22) is provided with the first insulating layer (222).

10. The end cover assembly according to any one of claims 1 to 9, **characterized in that** the first fastener (22) is provided with at least one first through hole (223), wherein the first through hole (223) runs through a wall of the first fastener (22), and the second fastener (23) fills the first through hole (223).

11. The end cover assembly according to any one of claims 1 to 10, **characterized in that** at least one recess (212) is provided on a surface of the electrode terminal (21) connected to the second fastener (23), and the second fastener (23) fills the recess (212).

12. A battery cell (20), **characterized by** comprising:
a housing (32) having a first opening, configured to accommodate an electrode assembly; and
the end cover assembly according to any one of claims 1 to 11, configured to cover the first opening.

13. A battery, **characterized by** comprising:
the battery cell (20) according to claim 12; and
a box (11), wherein the box (11) is configured to accommodate the battery cell.

14. An electric device, **characterized by** comprising the battery (10) according to claim 13, wherein the battery (10) is configured to supply electrical energy to the electric device.
